# EUROPÄISCHE PATENTSCHRIFT

(11) **EP 1 237 354 B1**
(45) Veröffentlichungstag und Bekanntmachung des Hinweises auf die Patenterteilung: **14.08.2013**
(21) Anmeldenummer: 02001754.7
(22) Anmeldetag: 25.01.2002
(51) Int. Cl.: H04N 1/407

(54) **Druck-Reproduktionsverfahren**
Print reproduction method
Procédé de reproduction par impression

(30) Priorität: 01.03.2001 DE 10110736; 31.10.2001 DE 10154655
(43) Veröffentlichungstag der Anmeldung: 04.09.2002
(73) Patentinhaber: Epple Druckfarben AG, 86356 Neusäss-Augsburg (DE)
(72) Erfinder: Epple, Rudolf, 86150 Augsburg (DE)
(74) Vertreter: Regelmann, Thomas

(56) Entgegenhaltungen:
- EP-A- 0 370 271
- EP-A- 0 417 806
- EP-A- 0 533 593
- EP-A- 0 538 901
- EP-A- 0 859 507
- WO-A-01/91453
- US-A- 5 748 858
- US-A- 5 946 454

## Beschreibung

Die Erfindung betrifft ein Druck-Reproduktionsverfahren, bei dem Kenndaten einer Vorlage in für den Druck erforderliche Daten transformiert werden.

Bei Druck-Reproduktionsverfahren wird üblicherweise beispielsweise von einem Dia ausgehend ein Farbauszug mittels entsprechenden Farbfiltern hergestellt. Der einem Scanner zugeordnete Farbraum ist ein RGB-Farbraum mit den Skalenfarben Rot (R), Grün (G) und Blau (B). Beim Druck, wie beispielsweise dem Offsetdruck, werden die Farbauszüge gerastert. Der Farbeindruck beim Offsetdruck beruht auf der autotypischen Farbmischung, d.h. auf einer Kombination von additiver Farbmischung und substraktiver Farbmischung. Der Skalenraum der Druckfarben ist üblicherweise ein CMYK-Farbraum, bei dem die Skalenfarben Cyan (C), Magenta (M), Gelb (Y) und Schwarz (K) sind.

Naturgemäß sollte der Druck im Ergebnis möglichst dicht an der Vorlage liegen, d.h. die Qualität und Farbverbindlichkeit der Bildreproduktion im Druck sollte möglichst hoch sein.

Beim Druck selber tritt noch als spezifisches Problem auf, daß Farbpunkte aufgrund von mechanischen Einwirkungen gequetscht werden, beispielsweise beim Offsetdruck bei der Übertragung von der Offsetplatte auf ein Gummituch und dann nochmals bei der Übertragung von dem Gummituch auf Papier. Ein gedruckter Rasterpunkt ist dann durch den Druckvorgang vergrößert, d.h. er weist eine vergrößerte Punktfläche auf als eigentlich durch die Transformation von der Vorlage in die für den Druck erforderlichen Daten vorgesehen. Die Punktzunahme ist grundsätzlich ein unerwünschter und störender Effekt, der sich auf die Farbwiedergabe im Druck auswirken kann. Mittels des Effekts der Punktzunahme können im Druck Farbverfälschungen gegenüber der Vorlage auftreten.

Der Effekt der Punktzunahme wird durch eine sogenannte Druckkennlinie beschrieben, bei welcher die Flächendeckung im Druck bezüglich der Flächendeckung in einer Farbauftrag-Vorlage, beispielsweise einem Film oder einer Platte, angegeben wird. Ohne die Punktzunahme wäre die Druckkennlinie eine Gerade, welche eine Winkelhalbierende zur Ordinate (Flächendeckung im Druck) und Abszisse (Flächendeckung in der Farbauftrag-Vorlage) darstellt.

In der Druckschrift "PHILOSOPHIE DES COLOR MANAGEMENT; Postscriptum Color Management" von S. Brües, L. May und D. Fuchs, LOGO GmbH, 2. Auflage, Februar 2000 sind Reproduktionsverfahren vor dem Hintergrund des Farb-Managements beschrieben.

Aus der EP 0 538 901 A2 ist ein Verfahren zur Erzeugung einer Reproduktionscharakteristik aufbauend auf einem bildgebenden System bekannt.

Aus der WO 01/91453 A1 ist ein Verfahren zum Kalibrieren einer computergesteuerten Druckmaschine bekannt.

Der Erfindung liegt die Aufgabe zugrunde, ein Druck-Reproduktionsverfahren bereitzustellen, bei dem die Punktzunahme derart steuerbar ist, dass sich optimale Reproduktionsergebnisse im Druck ergeben.

Diese Aufgabe wird erfindungsgemäß dadurch gelöst, dass zur Steuerung der Punktzunahme im Druck für die Transformation ein modifizierter Druckkennlinienverlauf vorgegeben wird, welcher bezogen auf den idealen Druckkennlinienverlauf ein Maximum oberhalb einer Flächendeckung von 50 % aufweist, und wobei der modifizierte Druckkennlinienverlauf bezogen auf den idealen Druckkennlinienverlauf einen Nulldurchgang bei einer endlichen Flächendeckung aufweist.

Der modifizierte Druckkennlinienverlauf lässt sich als eine Auftragung der Punktzunahme (in Prozent) über der Flächendeckung in Prozent der Platte oder des Films darstellen. Bei dieser Darstellung ist die Abszisse (die 0 %-Linie der Punktzunahme) die ideale Druckkennlinie.

Erfindungsgemäß wird ein modifizierter Druckkennlinienverlauf bzw. eine modifizierte Punktzunahme vorgegeben, welcher bzw. welche nicht auf experimentellen Werten basiert, sondern theoretisch vorgegeben wird. Bisher ist es üblich, experimentelle Druckkennlinien zu bestimmen und diese dann bei der Transformation zu berücksichtigen. Die tatsächliche Druckkennlinie unterscheidet sich aber von Druckmaschine zu Druckmaschine und ist abhängig von der Beschaffenheit der eingesetzten Druckfarben und auch von der Papiersorte, auf welche gedruckt wird. Es ist ein erheblicher Aufwand erforderlich, jeweils die experimentelle Druckkennlinie zu bestimmen.

Erfindungsgemäß ist es vorgesehen, dass das Maximum des modifizierten Druckkennlinienverlaufs bezogen auf den idealen Druckkennlinienverlauf oberhalb einer Flächendeckung von 50 % liegt und insbesondere bei einer Flächendeckung zwischen 50 % und 70 % liegt. Sehr gute Ergebnisse haben sich dabei erzielen lassen, wenn das Maximum des modifizierten Druckkennlinienverlaufs bezogen auf den idealen Druckkennlinienverlauf bei ca. 60 % Flächendeckung liegt. Diese guten Ergebnisse sind vor allem darauf zurückzuführen, dass bei modernen Reproduktionsverfahren Rasterpunkte keinen quadratischen Querschnitt aufweisen, sondern beispielsweise im Wesentlichen kreisförmig sind. Daher ist auch beim Drucken von allen Rasterpunkten eines Rasters die Flächenbedeckung nicht vollständig, das heißt, es liegt keine Flächendeckung von 100 % vor. Das Maximum sollte in einem Bereich liegen, wenn benachbarte Rasterpunkte sich zu überlappen beginnen. Dies ist der Fall, wenn eine größer als 50 %-ige Flächendeckung erreicht ist.

Theoretisch beginnen kreisförmige Punkte auf einer Fläche, auf welcher sie schachbrettförmig angeordnet sind, sich bei einer Flächendeckung von ca. 78 % (π/4 • 100 %) zu überlappen. Berücksichtigt man noch eine Punktzunahme von ca. 10 % bis 25 %, dann sollte das Maximum bei ca. 60 % Flächendeckung liegen.

Es ist vorgesehen, dass bei dem theoretischen Ansatz für den Druckkennlinienverlauf ein Nulldurchgang bei einem endlichen Wert der Flächendeckung liegt, das heißt außerhalb einer Flächendeckung von 0 % und/oder einer Flächendeckung von 100 % liegt. Dadurch entspricht der modifizierte Druckkennlinienverlauf im Bereich niedriger Flächendeckungen von der Flächendeckung Null bis zu dem entsprechenden Nulldurchgang dem idealen Druckkennlinienverlauf und wiederum im Bereich hoher Flächendeckungen von dem Nulldurchgang bis zur Flächendeckung 100 % dem idealen Druckkennlinienverlauf. Diesem Ansatz liegt insbesondere die Beobachtung zugrunde, dass sich bei niedrigen Flächendeckungen eine höhere Farbverbindlichkeit erreichen lässt, wenn die modifizierte Punktzunahme nicht zu hoch angesetzt wird. Dies liegt daran, dass bei kleinen Flächendeckungen die gedruckten Punkte klein sind und somit vermutlich die Punktzunahme eine geringere Rolle spielt. Ein ungeeigneter Kompensationsversuch kann dann sehr viel stärkere Farbabweichungen bewirken als der erfindungsgemäße Verzicht auf eine Kompensation oder eine Verringerung der Kompensation bei sehr kleinen Flächendeckungen. Bei sehr kleinen Flächendeckungen (unter ca. 3%) ist es auch mechanisch sehr schwierig, Punkte zu drucken, sofern im Offset-Verfahren mit Feuchtung gedruckt wird. Es ist deshalb auch aus diesem Grund sinnvoll, unterhalb dieser Flächendeckungsgrenze keine Modifikation durchzuführen.

Ferner liegt dem modifizierten Druckkennlinienverlauf die Beobachtung zugrunde, daß auch bei hohen Flächendeckungen die modifizierte Punktzunahme geringer anzusetzen ist. Ein Grund dürfte dabei mindestens für den Bereich hoher Flächendeckungen darin liegen, daß bei modernen Reproduktionsverfahren entsprechende Rasterpunkte kreisförmig sind, so daß ab einer Flächendeckung von größer ca. 60 % benachbarte Rasterpunkte sich zu überlappen beginnen und auch beim Drucken von allen Rasterpunkte eines Rasters die Flächenbedeckung nicht vollständig ist, das heißt, nicht einer 100 %-igen Flächenbedeckung entspricht. Da es schwierig ist, kleine Punkte in einer vollständigen Farbfläche offen zu halten, kann auch hier eine ungeeignete Kompensation zu stärkeren Farbverfälschungen führen als gar keine Kompensation. Die genannten Schwierigkeiten treten insbesondere bei Offset-Verfahren mit Feuchtung auf.

Bei dem modifizierten Druckkennlinienverlauf handelt es sich um eine stetige und insbesonders stetig differenzierbare Kurve bzw. um Wertevorgaben, die durch eine solche Kurve interpolierbar sind. Vorteilhafterweise weist dabei die Kurve wiederum einen ersten Monotoniebereich auf, in dem die modifizierte Punktzunahme ausgehend von der Nullstelle bei niedriger Flächendeckung zu einem Maximum hin zunimmt und von diesem Maximum hin zu der Nullstelle bei hoher Flächendeckung hin abnimmt.

Dadurch, daß ein modifizierter - d.h. theoretischer oder hypothetischer - Druckkennlinienverlauf vorgegeben wird, weist dieser Druckkennlinienverlauf nur wenige, schnell einstellbare Parameter auf. Auch wenn eine Vorlage auf verschiedenen Druckmaschine gedruckt werden soll, muß nicht jeweils für jede Druckmaschine erneut der Druckkennlinienverlauf experimentell ermittelt werden, sondern es wird der erfindungsgemäße modifizierte Druckkennlinienverlauf vorgegeben und es werden die zur Verfügung stehenden Parameter so eingestellt, daß sich ein optimales Ergebnis ergibt. Die Nebenbedingung kann dabei aber beispielsweise sein, daß der modifizierte Druckkennlinienverlauf bezogen auf den idealen Druckkennlinienverlauf (die modifizierte Punktzunahme bezogen auf die Flächendeckung der Farbauftrag-Vorlage) einen Nulldurchgang bei einer endlichen Flächendeckung, das heißt außerhalb 0 % oder 100 %, aufweist.

Das erfindungsgemäße Druck-Reproduktionsverfahren läßt sich vorteilhafterweise einsetzen für das Drucken mit Druckfarben, welche im Druck eine hohe Dichte aufweisen und insbesondere eine Dichte aufweisen, wie sie bisher im Offsetdruck nicht üblich war. Solche erhöhte Dichten werden durch erhöhte Pigmentkonzentrationen in den Druckfarben erreicht und auch durch einen höheren Farbauftrag. Dies wiederum bedeutet eine erhöhte Schichtdicke und damit eine erhöhte Punktzunahme, da grundsätzlich eine stärkere Druckfarbenschicht auch stärker deformiert (breitgequetscht) werden kann als dies bei einer dünneren Druckfarbenschicht der Fall ist. Druckfarben, welche sich mit einer höheren Dichte drucken lassen, sind in der DE 100 03 071 A1 beschrieben; auf dieses Dokument wird hiermit ausdrücklich Bezug genommen.

Günstig ist es, wenn der modifizierte Druckkennlinienverlauf bezogen auf den idealen Druckkennlinienverlauf der Abhängigkeit einer modifizierten Punktzunahme von der Flächendeckung einer Farbauftrag-Vorlage entspricht. Die modifizierte Punktzunahme ist dabei keine tatsächliche - experimentell gemessene - Punktzunahme, sondern eine von außen vorgegebene hypothetische - theoretische - Punktzunahme.

Insbesondere ist es dabei vorteilhaft, wenn der Nulldurchgang des modifizierten Druckkennlinienverlaufs bei niedrigen Flächendeckungen im Bereich zwischen 3 % und 30 % Flächendeckung liegt und vorteilhafterweise bei Flächendeckungen zwischen 5 % und 25 % liegt. Dadurch wird die modifizierte Punktzunahme im Bereich niederer Flächendeckungen verringert.

Es hat sich auch als vorteilhaft erwiesen, wenn der Nulldurchgang des modifizierten Druckkennlinienverlaufs bezogen auf den idealen Druckkennlinienverlauf bei hohen Flächendeckungen im Bereich zwischen 90 % und 98 % Flächendeckung und insbesondere im Bereich zwischen 95 % und 98 % Flächendeckung liegt. Dadurch haben sich auch bei hohen Flächendeckungen farbtreue Wiedergaben im Druck ergeben.

Sehr gute Resultate haben sich erzielen lassen, wenn der Nulldurchgang des modifizierten Druckkennlinienverlaufs bei niedriger Flächendeckung eine flachere Steigung aufweist als der Nulldurchgang bei hoher Flächendeckung. Dadurch haben sich hohe farbtreue Druck-Wiedergaben von Vorlagen erhalten lassen. Bei niedrigen Flächendeckungen sind die gedruckten Punkte von geringerer Größe und die Punktzunahme sollte nicht überkompensiert werden. Mit zunehmender Flächendeckung sollte die Kompensation sich allmählich erhöhen. Bei großen Flächendeckungen dagegen werden Punkte übereinander gedruckt (bei quadratischen Rasterpunkten erfolgt dies teilweise an überlappenden Enden), so daß ein "negatives" Raster entsteht. Die Punktzunahmekompensation sollte dann steiler zurückgehen, um den Einfluß dieses negativen Rasters gering zu halten.

Insbesondere liegt dabei die Steigung des Nulldurchgangs bei niedriger Flächendeckung im Bereich zwischen 20° und 30° und die Steigung des Nulldurchgangs bei hoher Flächendeckung im Bereich zwischen 25° und 35°.

Ganz besonders vorteilhaft ist es, wenn der modifizierte Druckkennlinienverlauf durch eine mathematische Funktion vorgegeben wird. Durch eine solche Funktion, die wenige übersichtliche Parameter aufweist, läßt sich dann schnell eine geeignete Transformation von Vorlagedaten in Druckdaten erreichen und gegebenenfalls läßt sich eine Anpassung über ein oder mehrere Parameter der vorgegebenen mathematischen Funktion durchführen, um das Druckergebnis bezüglich der Farbverbindlichkeit zu optimieren.

In der Praxis haben sich hervorragende Ergebnisse erhalten lassen, wenn die vorgegebene mathematische Funktion mehrere und insbesondere zwei Kreisbögen umfaßt. Ein Kreisbogen weist weitere Parameter auf, welche durch die Lage des Mittelpunkts des Kreises, welcher den Kreisbogen bildet und durch den Radius des Kreises, welcher den Kreisbogen bildet, vorgegeben sind und entsprechend einstellbar sind. Es liegen dann bei einem Kreisbogen drei Parameter vor, welche einstellbar sind (unter der Nebenbedingung der Erzeugung eines stetig differenzierbaren Kurvenverlaufs der modifizierten Druckkennlinie). Dies ist für den Bediener übersichtlich und einfach durchzuführen. Es ist dabei auch insbesondere möglich, daß der modifizierte Druckkennlinienverlauf durch zwei Kreisbögen zusammengesetzt wird, um so unterschiedliche Steigungen bei den Nulldurchgängen niedriger Flächendeckung und hoher Flächendeckung zu erhalten.

Es ist auch möglich, daß die vorgegebene mathematische Funktion ein oder mehrere Ellipsenbögen oder Parabelbögen oder Hyperbelbögen ist.

Neben der Vorgabe der Nullstellen der modifizierten Punktzunahme bezogen auf die Flächenbedeckung der Vorlage spielt auch die modifizierte absolute Größe der Punktzunahme (die theoretische maximale Größe der Punktzunahme) eine Rolle für das Erhalten einer farbverbindlichen Reproduktion. Es hat sich gezeigt, daß sich gute Ergebnisse erhalten lassen, wenn der modifizierte Druckkennlinienverlauf bezogen auf den idealen Druckkennlinienverlauf eine maximale prozentuale Punktzunahme aufweist, welche unterhalb von 30 % liegt. Sehr gute Ergebnisse hat man, insbesondere auch für Druckfarben mit hoher Dichte im Druck, erhalten, wenn die maximale prozentuale Punktzunahme im Bereich von 5 % und 30 % liegt und beispielsweise bei 10 % liegt.

Es haben sich weiterhin sehr gute Druckergebnisse erzielen lassen, wenn für Schwarz im Druck ein modifizierter Schwarz-Druckkennlinienverlauf verwendet wird, d.h. ein von den übrigen Farbtönen (Bunttönen) getrennter modifizierter Druckkennlinienverlauf verwendet wird. Es hat sich als vorteilhaft erwiesen, daß beim Druck mit höherer Dichte die Standarddichte von Schwarz relativ zu den Buntton-Druckfarben einen bestimmten Dichteabstand von beispielsweise 0,5 aufweist. Dies ist in der DE 100 03 071 A1 offenbart, auf die hiermit ausdrücklich Bezug genommen wird. Der Abstand der Dichte von Schwarz im Druck läßt sich dann über einen eigenen modifizierten Druckkennlinienverlauf berücksichtigen. Entsprechend werden günstigerweise für die Bunttöne ein eigener modifizierter Buntton-Druckkennlinienverlauf oder nach den Bunttönen getrennte modifizierte Buntton-Druckkennlinienverläufe verwendet.

Das erfindungsgemäße Verfahren hat hervorragende Reproduktionsergebnisse insbesondere für den Druck mit Druckfarben mit erhöhter Dichte im Druck ergeben. Bei dem Druck mit erhöhter Dichte werden die Druckfarben mit einer erhöhten Schichtdicke aufgebracht, so daß hier auch die Möglichkeit einer stärkeren Deformierung besteht und damit das Problem der Punktzunahme verstärkt ist. Durch die erfindungsgemäße Vorgabe eines modifizierten Druckkennlinienverlaufs läßt sich diese verstärkte Punktzunahme so weit kompensieren, daß sich hervorragende Druckergebnisse erhalten ließen.

Gute Ergebnisse haben sich insbesondere dann ergeben, wenn die Standarddichte im Druck bei der Druckfarbe mit der niedrigsten Dichte mindestens bei ca. 1,6 liegt.

Vorteilhafterweise wird dabei für den Druck ein CMYK-Skalensatz von Druckfarben verwendet.

Besonders gute Ergebnisse wurden für hohe Druckdichten erreicht, wenn beispielsweise die Standarddichte im Druck bei den Druckfarben in dem Farbton Gelb (Y) bei ca. 2,0 liegt, bei dem Farbton Magenta (M) bei ca. 2,4 liegt, bei dem Farbton Cyan (C) bei ca. 2,5 liegt, und bei dem Farbton Schwarz (B) bei ca. 3,0 liegt.

Als Druckfarben mit hoher Dichte im Druck lassen sich insbesondere solche Druckfarben verwenden, welche aus einer Mischung eines Bindemittels, eines Farbmittels und von Druck-Hilfsmitteln hergestellt sind und bei denen der Farbmittelanteil in einer Druckfarbe als Pigmentanteil im Bereich zwischen 15 % und 40 % liegt. Solche Druckfarben sind in der DE 100 03 071 A1 beschrieben, auf die hiermit ausdrücklich Bezug genommen wird.

Bei einer Variante einer Ausführungsform umfaßt die Transformation von der Vorlage in Druckdaten eine Farbraum-Transformation von einem RGB-Farbraum in einen CMYK-Farbraum, um so beispielsweise eine Vorlage von einem Monitor oder einem Dia mittels einer Druckmaschine drucken zu können.

Auf vorteilhafte Weise läßt sich das erfindungsgemäße Druck-Reproduktionsverfahren beim Offsetdrucken einsetzen.

Besonders vorteilhaft ist es, wenn der modifizierte Druckkennlinienverlauf in ein Farb-Management-System eingegeben wird. Als solches Farb-Management-System wird beispielsweise Adobe Photoshop eingesetzt. (Adobe und Photoshop sind eingetragene Marken von Adobe Systems Incorporated.) Durch Farb-Management-Systeme werden Farbdaten verarbeitet, um ausgehend von einer Vorlage ein Druckergebnis einer Druck-Reproduktion zu erhalten, die farblich der Vorlage entspricht. Mit Farb-Management-Systemen lassen sich auch bei modernen Reproduktions-Umgebungen eine vorlagenverbindliche Farb-Reproduktion erhalten. Es wird dabei auf die eingangs genannte Druckschrift "PHILOSOPHIE UND TECHNIK DES COLOR MANAGEMENT" verwiesen, auf die ausdrücklich Bezug genommen wird. Solche Color-Management-Systeme (Farb-Management-Systeme) weisen oftmals Schnittstellen auf, über die sich experimentelle Druckkennlinienverläufe eingeben lassen. Dadurch, daß der erfindungsgemäße modifizierte Druckkennlinienverlauf in ein Color-Management-System eingegeben wird, läßt sich auf einfache Weise ein gutes Reproduktionsergebnis hinsichtlich einer Kompensation der Punktzunahme erreichen.

Wichtig ist es auch, daß, wenn der modifizierte Druckkennlinienverlauf im Rahmen eines Farb-Management-Systems verwendet wird und einzelne Wertepunkte eingegeben werden, die Wertepunkte dicht genug liegen, um sicherzustellen, daß der vorgegebene modifizierte Druckkennlinienverlauf berücksichtigt wird. Es ist dabei insbesondere wichtig, daß an den Rändern der Kurve bei den Nulldurchgängen die Werte genügend dicht sind, da gerade dort die Punktzunahme den größten Einfluß auf die Farbverbindlichkeit hat.

Die nachfolgende Beschreibung bevorzugter Ausführungsbeispiele dient im Zusammenhang mit der Zeichnung der näheren Erläuterung der Erfindung. Es zeigen:
- Fig. 1: eine schematische Darstellung der Reproduktion einer Vorlage in einem Druck;
- Fig. 2: (a) schematisch einen mit Druckfarbe gesättigten Rasterpunkt einer Offsetplatte,
(b) den Farbpunkt nach Übertragung auf ein Gummituch und
(c) den Farbpunkt nach Übertragung auf das Papier im Druck;
- Fig. 3: einen typischen Druckkennlinienverlauf und eine ideale Druckkennlinie und
- Fig. 4: zwei Ausführungsbeispiele vorgegebener modifizierter Druckkennlinienverläufe als modifizierte Punktzunahme bezogen auf eine Flächendeckung in der Vorlagenplatte.

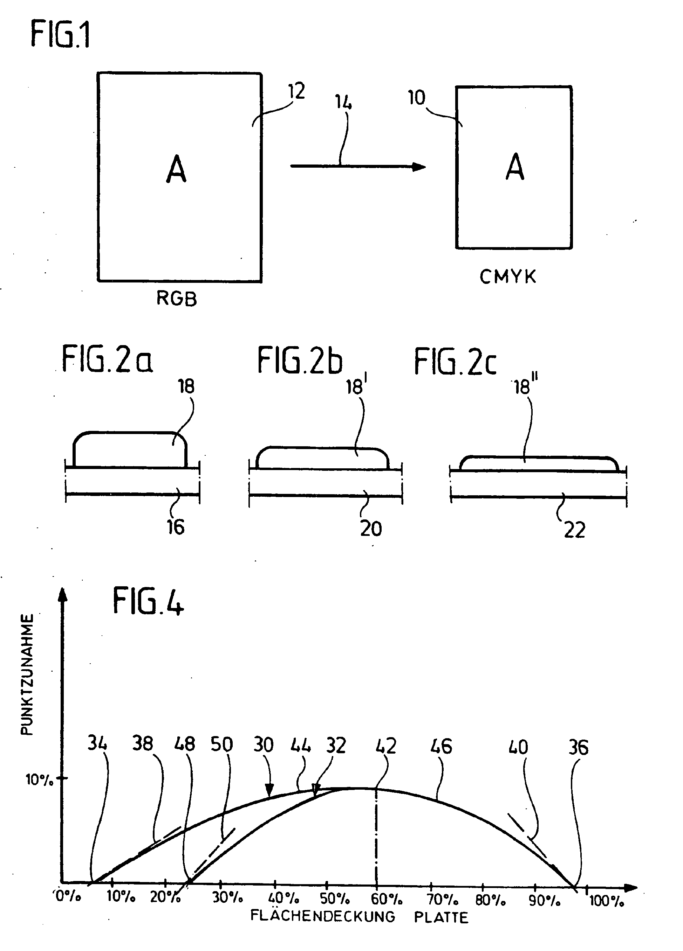

Zur Herstellung eines Drucks 10 von einer Vorlage 12 wird beispielhaft so vorgegangen (Figur 1), daß von der Vorlage 12, beispielsweise einem Dia, mittels eines Scanners Farbauszüge in einem RGB-Farbraum erstellt werden, welcher die Skalenfarben Rot (R), Grün (G) und Blau (B) umfaßt. Diese Daten werden durch eine Transformation 14 umgerechnet in Daten beispielsweise eines CMYK-Farbraums, welcher die Skalenfarben Cyan (C), Gelb (Y), Magenta (M) und Schwarz (K) umfaßt.

Es können auch Zwischentransformationen von RGB in LAB und dann von LAB in CMYK vorgesehen sein. Siehe dazu die eingangs genannte Druckschrift "PHILOSOPHIE DES COLOR MANAGEMENT".

Die Transformation stellt eine farbmetrisch eindeutige Verknüpfung eines Farbraums mit einem Referenz-Farbsystem dar. Beispielsweise wird jedem RGB-Wert eines Scanner-Farbraums ein entsprechender Farbwert aus dem Referenz-System zugeordnet. Für den Geräte-unabhängigen Referenz- oder Verknüpfungs-Farbraum gilt ein Standard, der sogenannte ICC-Standard (ICC-International Color Consortium).

Die Farbtransformation kann mittels mathematischen Modellen wie beispielsweise Matrix-Operationen oder Nachschlagtabellen durchgeführt werden.

Der Datensatz im CMYK-Farbraum ist dabei verfahrensspezifisch, beispielsweise ergeben sich unterschiedliche Datensätze für den Tiefdruck, den Offsetdruck oder den Siebdruck.

Die Farbauszüge werden dann beim Beispiel des Offsetdrucks getrennt für R, G und B gerastert und auf eine Offsetplatte kopiert, welche insbesondere durch eine gekörnte Zinkplatte gebildet ist. In der Offsetmaschine ist die Offsetplatte auf einen Plattenzylinder gespannt und dient dazu, die Druckfarbe von den Farbwalzen auf die Bild-tragenden Teile zu übernehmen. Die Druckfarbe wird über ein auf einen Zylinder gespanntes Gummituch auf das Papier übertragen, um dort die Vorlage zu reproduzieren, wobei die Druckfarben mit den Farbtönen C, Y und M zusammen mit einer den Kontrast verstärkenden Schwarzplatte übereinandergedruckt werden.

In Fig. 2 sind schematisch Farbpunkte beim Übergang von der Offsetplatte auf das Papier gezeigt. In Fig. 2(a) ist eine Offsetplatte 16 mit einem Farbpunkt 18 gezeigt. In Fig. 2(b) ist derselbe Farbpunkt 18' nach Übertragung auf ein Gummituch 20 gezeigt. Aufgrund von beim Übertragungsvorgang von der Offsetplatte auf das Gummituch 20 anliegenden Anpreßdrücken wird der Farbpunkt 18' gequetscht, d.h. die Punktfläche des Farbpunktes 18' vergrößert sich infolge des Anpreßdruckes, welchem die auf einem Rasterpunkt liegende Farbschicht 18 während des Übertragungsvorgangs ausgesetzt ist.

In der Fig. 2(c) ist schließlich derselbe Farbpunkt 18" nach der Übertragung auf Papier 22 gezeigt. Auch hier findet eine weitere Quetschung (Punktzunahme) aufgrund von Anpreßdrücken statt, welchen der Farbpunkt 18' bei der Übertragung von dem Gummituch 20 auf das Papier 22 ausgesetzt ist.

Das Ausmaß der Vergrößerung der Punktfläche des Punktes 18" gegenüber dem Punkt 18 auf der Offsetplatte 16 ist neben der Abhängigkeit von den Anpreßdrücken insbesondere abhängig von der Menge der von Farbauftragwalzen auf die Offsetplatte 16 angebotenen Farbmenge; je stärker der Farbauftrag beim Druckvorgang, desto größer ist die zu erwartende Punktzunahme.

Daneben ist die Punktzunahme auch abhängig von der Beschaffenheit des Gummituchs 20, der Druckgeschwindigkeit, der Beschaffenheit der Druckfarbe und der Beschaffenheit des Papiers, auf welchem gedruckt wird.

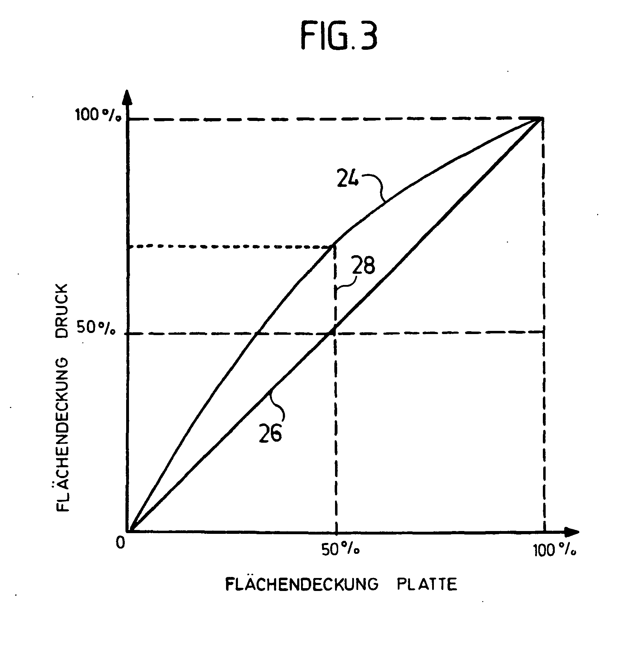

Die Abhängigkeit der Flächendeckung im Druck über der Flächendeckung in der Platte ist anhand Fig. 3 gezeigt. Die entsprechende Kurve 24 wird als Druckkennlinie bezeichnet; diese erfaßt die Abhängigkeit der Punktzunahme von den Parametern des Druckvorgangs, d.h. wie oben beschrieben insbesondere den Anpreßdrücken bei der Übertragung von der Offsetplatte 16 auf das Gummituch 20 und von dort auf das Papier 22, der Beschaffenheit des Gummituchs, der Druckgeschwindigkeit und auch der Schichtdicke. Die Druckkennlinie 24 hängt damit neben der Dichte im Druck auch von der Offset-Druckmaschine selber ab. Üblicherweise wird die Druckkennlinie 24 für eine bestimmte Druckmaschine experimentell bestimmt.

Eingezeichnet ist in Fig. 3 auch noch ein idealer Druckkennlinienverlauf 26, wenn keine Punktzunahme vorliegen würde, d.h. wenn die Farbpunkte 18 auf der Offsetplatte 16 ungequetscht als Farbpunkte 18" sich auf das Papier 22 übertragen ließen.

Die Punktzunahme, beispielsweise die Punktzunahme 28 bei einer Flächendeckung von 50 % der Platte, ist der Abstand zwischen der tatsächlichen Druckkennlinie 24 und der idealen Druckkennlinie 26.

Die ideale Druckkennlinie 26 ist dabei die Winkelhalbierende zwischen Abszisse und Ordinate (45°-Gerade).

Erfindungsgemäß wird nun ein modifizierter Druckkennlinienverlauf vorgegeben, welcher anhand zweier beispielhafter Ausführungsformen in Fig. 4 gezeigt ist. Das erste Ausführungsbeispiel eines modifizierten Druckkennlinienverlaufs trägt das Bezugszeichen 30 und das zweite Ausführungsbeispiel das Bezugszeichen 32. Beiden modifizierten Druckkennlinienverläufen gemeinsam ist dabei, daß ihre Nulldurchgänge, das heißt ihre Durchgänge bei der Punktzunahme 0 % bei einer endlichen Flächendeckung liegen, das heißt außerhalb von 0 % und 100 %.

Bei dem ersten Ausführungsbeispiel 30 liegt der Nulldurchgang 34 niedriger Flächendeckung bei ca. 7 % Flächendeckung und der Nulldurchgang 36 hoher Flächendeckung bei ca. 98 % Flächendeckung. Dies bedeutet, daß die modifizierte Punktzunahme aufgrund des modifizierten Druckkennlinienverlaufs 30 bei niedrigen Flächendeckungen zu der Flächendeckung Null hin abgeschwächt wird, das heißt, diese wird mit einem geringeren Wert angesetzt, als er sich beispielsweise gemäß dem gemessenen Druckkennlinienverlauf 24 gemäß Figur 3 ergeben würde. Insbesondere wird in dem Bereich der Flächendeckung zwischen Null und dem Nulldurchgang 34 durch den modifizierten Druckkennlinienverlauf die Punktzunahme als Null angesetzt (idealer Druckkennlinienverlauf).

Auf die gleiche Weise wird die modifizierte Punktzunahme zu hohen Flächendeckungen hin, das heißt zu 100 % Flächendeckung hin, abgeschwächt, das heißt, zwischen dem Nulldurchgang 36 und 100 %-iger Flächendeckung wird die Punktzunahme als Null angesetzt.

Ferner verläuft die modifizierte Druckkennlinie 30 im Bereich des Nulldurchgangs 34 flacher als im Bereich des Nulldurchgangs 36 bei hohen Flächendeckungen. Dazu ist bei dem Nulldurchgang 34 eine entsprechende Tangente 38 des modifizierten Druckkennlinienverlaufs 30 in durchbrochenen Linien eingezeichnet. Weiterhin ist die Tangente 40 am Nulldurchgang 36 dieses modifizierten Druckkennlinienverlaufs 30 gezeigt. Der spitze Winkel der Tangente 38 zu der Abszisse (welche der Punktzunahme Null entspricht) ist dabei kleiner als der entsprechende spitze Winkel zwischen der Tangente 40 und dieser Abszisse. Beispielsweise liegt dabei der Winkel der Tangente 38 zur Abszisse im Bereich zwischen 20° und 30° und der spitze Winkel der Tangente 40 zur Abszisse im Bereich zwischen 25° und 35°.

Generell liegt dabei der Nulldurchgang 34 im Bereich zwischen 3 % und 30 % Flächendeckung und der Nulldurchgang 36 im Bereich zwischen 90 % und 98 % Flächendeckung.

Erfindungsgemäß ist es vorgesehen, daß das Maximum 42 des modifizierten Druckkennlinienverlaufs 30 zu hohen Flächendeckungen hin verschoben ist, das heißt oberhalb einer Flächendeckung von 50 % liegt und insbesondere zwischen einer Flächendeckung von 50 % und 70 % liegt. Bei dem modifizierten Druckkennlinienverlauf 30 liegt dabei dieses Maximum 42 bei einer Flächendeckung von ca. 60 %.

Das Maximum 42, das heißt die maximale prozentuale Punktzunahme liegt bei einer Flächendeckung oberhalb von 50 %. Nur im Idealfall, wenn die Rasterpunkte rechteckig und insbesondere quadratisch sind, liegt die maximale prozentuale Punktzunahme bei einer Flächendeckung von im wesentlichen 50 %. Wenn aber die Rasterpunkte beispielsweise kreisförmig sind, können sich benachbarte Rasterpunkte überlappen, wobei dies effektiv dadurch berücksichtigt werden kann, daß der modifizierte Druckkennlinienverlauf eben sein Maximum 42 oberhalb einer 50 %-igen Flächendeckung und insbesondere im Bereich zwischen 50 % und 70 % und vorteilhafterweise bei ca. 60 %-iger Flächendeckung liegt.

Das Maximum der modifizierten Punktzunahme läßt sich dabei auf folgende Weise bestimmen:

Bei kreisförmigen Punkten, die schachbrettförmig angeordnet sind, beginnen diese bei einer Flächendeckung von ca. 78 % (π/4 • 100 %) sich zu überlappen. Geht man von einer Punktzunahme aus, die in der Größenordnung zwischen 10 % bis 25 % liegt, dann erhält man bei einem Maximum bei ca. 60 %-iger Flächendeckung mit 25 % Punktzunahme eine effektive Flächendeckung die bei ca. 75 % liegt und damit dicht bei dem theoretischen Wert von ca. 78 % für die Überlappung von schachbrettförmig angeordneten exakt kreisförmigen Punkten. Da in der Praxis die gedruckten Punkte nicht exakt kreisförmig sind, ergeben sich sehr gute Resultate, wenn das Maximum 42 oberhalb einer 50 %-igen Flächendeckung liegt und insbesondere bei ca. 60 %-iger Flächendeckung liegt.

In der Praxis haben sich sehr gute Reproduktionsergebnisse mit einem modifizierten Druckkennlinienverlauf 30 erzielen lassen, das heißt, hohe Farbverbindlichkeiten der Bildreproduktion im Druck ergeben, und zwar über den ganzen Bereich der Flächendeckung.

Der modifizierte Druckkennlinienverlauf 30, bei dem es sich insbesondere um eine stetig differenzierbare Kurve handelt, läßt sich auf einfache Weise durch einen ersten Kreisbogen 44 und einen zweiten Kreisbogen 46 erhalten, welche so aneinandergefügt werden, daß ein stetig differenzierbarer Übergang vorliegt. Durch die beiden unterschiedlichen Kreisbögen 44, 46 lassen sich damit dann auch die unterschiedlichen Steigungen an den Nulldurchgängen 34 und 36 einstellen.

Bei dem zweiten Ausführungsbeispiel 32 eines modifizierten Druckkennlinienverlaufs liegt wiederum ein Nulldurchgang bei hohen Flächendeckungen vor, welcher dem Nulldurchgang 36 des ersten Ausführungsbeispiels 30 entspricht. Bei niedrigen Flächendeckungen ist dabei ein Nulldurchgang 48 vorgesehen, welcher bei einer ca. 23 %-igen Flächendeckung liegt. Eine entsprechende Tangente 50 an dem Nulldurchgang 48 weist dabei wiederum einen kleineren spitzen Winkel relativ zu der Abszisse auf, als die Tangente 40 beim Nulldurchgang 36. Bei dem modifizierten Druckkennlinienverlauf 32 wird also die modifizierte Punktzunahme erst ab Flächendeckungen von ca. 23 % auf einen endlichen Wert gesetzt und nimmt dann zu dem Maximum 42 hin monoton zu.

Gegenüber dem modifizierten Druckkennlinienverlauf 30 wird bei dem Druckkennlinienverlauf 32 die modifizierte Punktzunahme bei niedrigen Flächendeckungen noch weiter erniedrigt, das heißt bei niedrigen Flächendeckungen bis zu dem Nulldurchgang 48 wird in dem modifizierten Druckkennlinienverlauf die Punktzunahme nicht berücksichtigt und es wird dann von der idealen Druckkennlinie eben bis zu dem Nulldurchgang 48 ausgegangen.

Der Erfindung liegt dabei die Erkenntnis zugrunde, daß in den Bereichen niedriger Flächendeckung mit genügendem Abstand zur Flächendeckung Null zu und in den Bereichen hoher Flächendeckung mit genügendem Abstand zur Flächendeckung 100 % zu die Punktzunahme sich am störendsten auf die Farbverbindlichkeit auswirkt und entsprechend hier eine rechnerische Kompensation der Punktzunahme am nötigsten ist; durch die erfindungsgemäße Vorgabe eines entsprechenden Druckkennlinienverlaufs bezogen auf den idealen Druckkennlinienverlauf läßt sich eine solche Kompensation auf einfache Weise erreichen, wobei sehr gute Ergebnisse für die Farbverbindlichkeit erzielt wurden.

Insbesondere wird eine modifizierte maximale Punktzunahme eingestellt, bei der es sich um einen vorgegebenen Wert handelt, welcher nicht unbedingt einer tatsächlichen Punktzunahme entsprechen muß. In der Praxis haben sich sehr gute Reproduktionsergebnisse mit einer maximalen modifizierten Punktzunahme im Bereich von ca. 10 % erreichen lassen.

Neben der Bildung des modifizierten Druckkennlinienverlaufs durch zwei Kreisbögen kann es vorgesehen sein, daß andere mathematische Funktionen gewählt werden, um einen modifizierten Druckkennlinienverlauf zu erhalten, beispielsweise mittels Hyperbelbögen, Ellipsenbögen oder Parabelbögen. Gute Reproduktionsergebnisse haben sich erzielen lassen, wenn die Nulldurchgänge des modifizierten Druckkennlinienverlaufs außerhalb einer Flächendeckung der Platte von 0 % und 100 % liegen.

Der vorgegebene modifizierte Druckkennlinienverlauf wird als mathematische Funktion oder über vorgegebene Werte des modifizierten Druckkennlinienverlaufs beispielsweise im Rahmen eines Farb-Management-Systems wie Adobe Photoshop verwendet (Adobe und Photoshop sind eingetragene Marken von Adobe Systems Incorporated). Solche Farb-Management-Systeme, die in der eingangs genannten Druckschrift "PHILOSOPHIE UND TECHNIK DES COLOR MANAGEMENT" beschrieben sind, ermöglichen durch Verstärkung oder Abschwächung von Bildelementen der einzelnen Farbauszüge eine Veränderung des beispielsweise von einem Scanner erzeugten Bildes in beliebiger Weise und beliebigem Ausmaße. In solchen Programmen sind experimentell bestimmte Druckkennlinien hinterlegt bzw. lassen sich hinterlegen.

Erfindungsgemäß wird nun der modifizierte Druckkennlinienverlauf in einem solchen Farb-Management-System hinterlegt, um beim Druck eine Kompensation der Punktzunahme erreichen zu können; dies bedeutet, daß aufgrund des vorgegebenen theoretischen Druckkennlinienverlaufs Druckfarben in der Flächendeckung entsprechend geringer aufgetragen werden, um die Punktquetschung so zu berücksichtigen, daß die Punktzunahme derart eingestellt ist, daß die Farbverbindlichkeit im wesentlichen gewahrt bleibt.

Insbesondere läßt sich erfindungsgemäß eine Punktzunahme, welche durch eine größere Schichtdicke von Druckfarbe entsteht, auffangen. In der DE 100 03 071 A1 sind Druckfarben beschrieben, mit welchen sich Dichteumfänge größer als 1,8 erreichen lassen. Auf dieses Dokument wird ausdrücklich Bezug genommen. Größere Dichteumfänge bedeuten auch, daß ein erhöhter Farbauftrag erfolgt, was wiederum erhöhte Schichtdicken und eine erhöhte Punktzunahme bewirkt. Derart überproportional hohe Punktzunahmen lassen sich erfindungsgemäß mittels der Vorgabe von modifizierten Druckkennlinienverläufen mit Nulldurchgängen der Punktzunahme außerhalb verschwindender und vollständiger Flächendeckung der Platte erreichen.

## Patentansprüche

1. Druck-Reproduktionsverfahren, bei dem Kenndaten einer Vorlage in für den Druck erforderliche Daten transformiert werden, wobei zur Steuerung der Punktzunahme im Druck für die Transformation ein modifizierter Druckkennlinienverlauf vorgegeben wird, welcher bezogen auf den idealen Druckkennlinienverlauf ein Maximum oberhalb einer Flächendeckung von 50 % aufweist, und wobei der modifizierte Druckkennlinienverlauf bezogen auf den idealen Druckkennlinienverlauf einen Nulldurchgang bei einer endlichen Flächendeckung, das heißt außerhalb 0% oder 100%, aufweist, so dass der modifizierte Druckkennlinienverlauf im Bereich niedriger Flächendeckungen von der Flächendeckung Null bis zu dem entsprechenden Nulldurchgang dem idealen Druckkennlinienverlauf und wiederum im Bereich höher Flächendeckungen von dem Nulldurchgang bis zur Flächendeckung 100% dem idealen Druckkennlinienverlauf entspricht.

2. Druck-Reproduktionsverfahren nach Anspruch 1, **dadurch gekennzeichnet, daß** der modifizierte Druckkennlinienverlauf bezogen auf den idealen Druckkennlinienverlauf der Abhängigkeit einer modifizierten Punktzunahme von der Flächendeckung entspricht.

3. Druck-Reproduktionsverfahren nach Anspruch 1 oder 2, **dadurch gekennzeichnet, daß** das Maximum des modifizierten Druckkennlinienverlaufs bezogen auf den idealen Druckkennlinienverlauf bei einer Flächendeckung zwischen 50 % und 70 % liegt.

4. Druck-Reproduktionsverfahren nach einem der vorangehenden Ansprüche, **dadurch gekennzeichnet, daß** das Maximum des modifizierten Druckkennlinienverlaufs bezogen auf den idealen Druckkennlinienverlauf bei ca. 60 % Flächendeckung liegt.

5. Druck-Reproduktionsverfahren nach einem der vorangehenden Ansprüche, **dadurch gekennzeichnet, daß** der Nulldurchgang des modifizierten Druckkennlinienverlaufs bei niedriger Flächendeckung im Bereich zwischen 3 % und 30 % Flächendeckung liegt.

6. Druck-Reproduktionsverfahren nach einem der vorangehenden Ansprüche, **dadurch gekennzeichnet, daß** der Nulldurchgang des modifizierten Druckkennlinienverlaufs bei niedriger Flächendeckung im Bereich zwischen 5 % und 25 % Flächendeckung liegt.

7. Druck-Reproduktionsverfahren nach einem der vorangehenden Ansprüche, **dadurch gekennzeichnet, daß** der Nulldurchgang des modifizierten Druckkennlinienverlaufs bei hoher Flächendeckung im Bereich zwischen 90 % und 98 % Flächendeckung liegt.

8. Druck-Reproduktionsverfahren nach einem der vorangehenden Ansprüche, **dadurch gekennzeichnet, daß** der Nulldurchgang des modifizierten Druckkennlinienverlaufs bei hoher Flächendeckung im Bereich zwischen 95 % und 98 % Flächendeckung liegt.

9. Druck-Reproduktionsverfahren nach einem der vorangehenden Ansprüche, **dadurch gekennzeichnet, daß** der Nulldurchgang des modifizierten Druckkennlinienverlaufs bei niedriger Flächendeckung eine flachere Steigung aufweist als der Nulldurchgang bei hoher Flächendeckung.

10. Druck-Reproduktionsverfahren nach Anspruch 9, **dadurch gekennzeichnet, daß** die Steigung des Nulldurchgangs bei niedriger Flächendeckung im Bereich zwischen 20° und 30° liegt.

11. Druck-Reproduktionsverfahren nach Anspruch 9 oder 10, **dadurch gekennzeichnet, daß** die Steigung des Nulldurchgangs bei hoher Flächendeckung im Bereich zwischen 25° und 35° liegt.

12. Druck-Reproduktionsverfahren nach einem der vorangehenden Ansprüche, **dadurch gekennzeichnet, daß** das Maximum des modifizierten Druckkennlinienverlaufs durch eine Korrelation der theoretischen Flächendeckung und der Punktzunahme bestimmt ist.

13. Druck-Reproduktionsverfahren nach einem der vorangehenden Ansprüche, **dadurch gekennzeichnet, daß** der modifizierte Druckkennlinienverlauf durch eine mathematische Funktion vorgegeben wird.

14. Druck-Reproduktionsverfahren nach Anspruch 13, **dadurch gekennzeichnet, daß** die vorgegebene Funktion mehrere Kreisbögen umfaßt.

15. Druck-Reproduktionsverfahren nach Anspruch 14, **dadurch gekennzeichnet, daß** die vorgegebene Funktion zwei Kreisbögen umfaßt.

16. Druck-Reproduktionsverfahren nach Anspruch 14 oder 15, **dadurch gekennzeichnet, daß** die Lage des Mittelpunkts des Kreises, welcher einen Kreisbogen bildet, einstellbar ist.

17. Druck-Reproduktionsverfahren nach einem der Ansprüche 14 bis 16, **dadurch gekennzeichnet, daß** der Radius des Kreises, welcher einen Kreisbogen bildet, einstellbar ist.

18. Druck-Reproduktionsverfahren nach einem der Ansprüche 13 bis 17, **dadurch gekennzeichnet, daß** die vorgegebene mathematische Funktion ein oder mehrere Ellipsenbögen oder Parabelbögen oder Hyperbelbögen ist.

19. Druck-Reproduktionsverfahren nach einem der vorangehenden Ansprüche, **dadurch gekennzeichnet, daß** der modifizierte Druckkennlinienverlauf bezogen auf den idealen Druckkennlinienverlauf eine maximale prozentuale Punktzunahme aufweist, welche unterhalb 30 % liegt.

20. Druck-Reproduktionsverfahren nach Anspruch 19, **dadurch gekennzeichnet, daß** die maximale prozentuale Punktzunahme im Bereich zwischen 5 % und 30 % liegt.

21. Druck-Reproduktionsverfahren nach Anspruch 20, **dadurch gekennzeichnet, daß** die maximale prozentuale Punktzunahme bei ca. 10 % liegt.

22. Druck-Reproduktionsverfahren nach einem der vorangehenden Ansprüche, **dadurch gekennzeichnet, daß** für Schwarz ein modifizierter Schwarz-Druckkennlinienverlauf verwendet wird.

23. Druck-Reproduktionsverfahren nach einem der vorangehenden Ansprüche, **dadurch gekennzeichnet, daß** für die Bunttöne ein modifizierter Buntton-Druckkennlinienverlauf verwendet wird.

24. Druck-Reproduktionsverfahren nach einem der vorangehenden Ansprüche, **dadurch gekennzeichnet, daß** für den Druck Druckfarben mit erhöhter Dichte im Druck verwendet werden.

25. Druck-Reproduktionsverfahren nach Anspruch 24, **dadurch gekennzeichnet, daß** die Standard-Dichte im Druck bei der Druckfarbe mit der niedrigsten Dichte mindestens bei ca. 1,6 liegt.

26. Druck-Reproduktionsverfahren nach einem der vorangehenden Ansprüche, **dadurch gekennzeichnet, daß** für den Druck ein CMYK-Skalensatz von Druckfarben verwendet wird.

27. Druck-Reproduktionsverfahren nach einem der Ansprüche 24 bis 26, **dadurch gekennzeichnet, daß** die Standard-Dichte im Druck bei der Druckfarbe im Farbton Gelb (Y) bei ca. 2,0 liegt.

28. Druck-Reproduktionsverfahren nach einem der Ansprüche 24 bis 27, **dadurch gekennzeichnet, daß** die Standard-Dichte im Druck bei der Druckfarbe mit dem Farbton Magenta (M) bei ca. 2,4 liegt.

29. Druck-Reproduktionsverfahren nach einem der Ansprüche 24 bis 28, **dadurch gekennzeichnet, daß** die Standard-Dichte im Druck bei der Druckfarbe mit dem Farbton Cyan (C) bei ca. 2,5 liegt.

30. Druck-Reproduktionsverfahren nach einem der Ansprüche 24 bis 29, **dadurch gekennzeichnet, daß** die Standard-Dichte im Druck der Druckfarben in dem Farbton Schwarz (B) bei ca. 3,0 liegt.

31. Druck-Reproduktionsverfahren nach einem der Ansprüche 24 bis 30, **dadurch gekennzeichnet, daß** eine Druckfarbe aus einer Mischung des Bindemittels, eines Farbmittels und von Druck-Hilfsmitteln hergestellt wird und der Farbmittelanteil in einer Farbe als Pigmentanteil zwischen 15 % und 40 % liegt.

32. Druck-Reproduktionsverfahren nach einem der vorangehenden Ansprüche, **dadurch gekennzeichnet, daß** die Transformation von der Vorlage in Druckdaten eine Farbraum-Transformation von einem RGB-Farbraum in einen CMYK-Farbraum umfaßt.

33. Druck-Reproduktionsverfahren nach einem der vorangehenden Ansprüche, **dadurch gekennzeichnet, daß** das Druckverfahren ein Offset-Druckverfahren ist.

34. Druck-Reproduktionsverfahren nach einem der vorangehenden Ansprüche, **dadurch gekennzeichnet, daß** der modifizierte Druckkennlinienverlauf in ein Farb-Management-System eingegeben wird.

## Claims

1. Reproduction method for printing wherein characteristic data of an original are transformed into data required for printing, wherein a modified characteristic curve of printing which in relation to the ideal characteristic curve of printing has a maximum above an area coverage of 50 % is predefined for the transformation in order to control the dot gain in printing, and wherein the modified characteristic curve of printing in relation to the ideal characteristic curve of printing has a zero crossing at a finite area coverage, i.e., outside 0 % or 100 %, so that the modified characteristic curve of printing in the range of low area coverages from zero area coverage to the corresponding zero crossing corresponds to the ideal characteristic curve of printing and again in the range of high area coverages from the zero crossing to 100 % area coverage to the ideal characteristic curve of printing.

2. Reproduction method for printing in accordance with claim 1, **characterized in that** the modified characteristic curve of printing in relation to the ideal characteristic curve of printing corresponds to the dependence of a modified dot gain on the area coverage.

3. Reproduction method for printing in accordance with claim 1 or 2, **characterized in that** the maximum of the modified characteristic curve of printing in relation to the ideal characteristic curve of printing lies at an area coverage of between 50 % and 70 %.

4. Reproduction method for printing in accordance with any one of the preceding claims, **characterized in that** the maximum of the modified characteristic curve of printing in relation to the ideal characteristic curve of printing lies at approximately 60 % area coverage.

5. Reproduction method for printing in accordance with any one of the preceding claims, **characterized in that** the zero crossing of the modified characteristic curve of printing at low area coverage lies in the range of between 3 % and 30 % area coverage.

6. Reproduction method for printing in accordance with any one of the preceding claims, **characterized in that** the zero crossing of the modified characteristic curve of printing at low area coverage lies in the range of between 5 % and 25 % area coverage.

7. Reproduction method for printing in accordance with any one of the preceding claims, **characterized in that** the zero crossing of the modified characteristic curve of printing at high area coverage lies in the range of between 90 % and 98 % area coverage.

8. Reproduction method for printing in accordance with any one of the preceding claims, **characterized in that** the zero crossing of the modified characteristic curve of printing at high area coverage lies in the range of between 95 % and 98 % area coverage.

9. Reproduction method for printing in accordance with any one of the preceding claims, **characterized in that** the zero crossing of the modified characteristic curve of printing at low area coverage has a flatter slope than the zero crossing at high area coverage.

10. Reproduction method for printing in accordance with claim 9, **characterized in that** the slope of the zero crossing at low area coverage lies in the range of between 20° and 30°.

11. Reproduction method for printing in accordance with claim 9 or 10, **characterized in that** the slope of the zero crossing at high area coverage lies in the range of between 25° and 35°.

12. Reproduction method for printing in accordance with any one of the preceding claims, **characterized in that** the maximum of the modified characteristic curve of printing is determined by a correlation of the theoretical area coverage and the dot gain.

13. Reproduction method for printing in accordance with any one of the preceding claims, **characterized in that** the modified characteristic curve of printing is predefined by a mathematical function.

14. Reproduction method for printing in accordance with claim 13, **characterized in that** the predefined function comprises several arcs of a circle.

15. Reproduction method for printing in accordance with claim 14, **characterized in that** the predefined function comprises two arcs of a circle.

16. Reproduction method for printing in accordance with claim 14 or 15, **characterized in that** the position of the centre point of the circle forming an arc of a circle is adjustable.

17. Reproduction method for printing in accordance with any one of claims 14 to 16, **characterized in that** the radius of the circle forming an arc of a circle is adjustable.

18. Reproduction method for printing in accordance with any one of claims 13 to 17, **characterized in that** the predefined mathematical function is one or several arcs of an ellipse, a parabola or a hyperbola.

19. Reproduction method for printing in accordance with any one of the preceding claims, **characterized in that** the modified characteristic curve of printing has in relation to the ideal characteristic curve of printing a maximum percent dot gain of less than 30 %.

20. Reproduction method for printing in accordance with claim 19, **characterized in that** the maximum percent dot gain lies in the range of between 5 % and 30 %.

21. Reproduction method for printing in accordance with claim 20, **characterized in that** the maximum percent dot gain is approximately 10 %.

22. Reproduction method for printing in accordance with any one of the preceding claims, **characterized in that** a modified black colour characteristic curve of printing is used for black.

23. Reproduction method for printing in accordance with any one of the preceding claims, **characterized in that** a modified chromatic colour tone characteristic curve of printing is used for the chromatic colour tones.

24. Reproduction method for printing in accordance with any one of the preceding claims, **characterized in that** printing inks with increased density in the print are used for printing.

25. Reproduction method for printing in accordance with claim 24, **characterized in that** the standard density in the print in the case of the printing ink with the lowest density is at least approximately 1.6.

26. Reproduction method for printing in accordance with any one of the preceding claims, **characterized in that** a CMYK set of process colours is used for printing.

27. Reproduction method for printing in accordance with any one of claims 24 to 26, **characterized in that** the standard density in the print in the case of printing ink of the colour tone yellow (Y) is approximately 2.0.

28. Reproduction method for printing in accordance with any one of claims 24 to 27, **characterized in that** the standard density in the print in the case of printing ink of the colour tone magenta (M) is approximately 2.4.

29. Reproduction method for printing in accordance with any one of claims 24 to 28, **characterized in that** the standard density in the print in the case of printing ink of the colour tone cyan (C) is approximately 2.5.

30. Reproduction method for printing in accordance with any one of claims 24 to 29, **characterized in that** the standard density in the print in the case of printing ink of the colour tone black (K) is approximately 3.0.

31. Reproduction method for printing in accordance with any one of claims 24 to 30, **characterized in that** a printing ink is made from a mixture of binder, colourant and printing additives, and the proportion of the colourant in an ink as proportion of pigment is between 15 % and 40 %.

32. Reproduction method for printing in accordance with any one of the preceding claims, **characterized in that** the transformation from the original to printing data comprises a colour space transformation from an RGB colour space to a CMYK colour space.

33. Reproduction method for printing in accordance with any one of the preceding claims, **characterized in that** the printing process is an offset printing process.

34. Reproduction method for printing in accordance with any one of the preceding claims, **characterized in that** the modified characteristic curve of printing is entered in a colour management system.

## Revendications

1. Procédé de reproduction par impression, où des caractéristiques d'un original sont transformées en données exigées pour l'impression, où un tracé de courbe caractéristique d'impression modifié est prescrit pour la commande d'engraissement du point de l'impression pour la transformation, lequel présente un maximum supérieur à une couverture surfacique de 50 % par rapport au tracé de courbe caractéristique d'impression idéal, et où le tracé de courbe caractéristique d'impression modifié présente un passage par zéro pour une couverture surfacique finale par rapport au tracé de courbe caractéristique d'impression idéal, soit en dehors de 0% ou de 100 %, de telle manière que le tracé de courbe caractéristique d'impression modifié correspond au tracé de courbe caractéristique d'impression idéal dans la plage des faibles couvertures surfaciques, de la couverture surfacique zéro au passage par zéro correspondant, et correspond à nouveau au tracé de courbe caractéristique d'impression idéal dans la plage des couvertures surfaciques élevées, du passage par zéro à la couverture surfacique 100 %.

2. Procédé de reproduction par impression selon la revendication 1, **caractérisé en ce que** le tracé de courbe caractéristique d'impression modifié correspond à la relation fonctionnelle entre un engraissement du point et la couverture surfacique, par rapport au tracé de courbe caractéristique d'impression idéal.

3. Procédé de reproduction par impression selon la revendication 1 ou 2, **caractérisé en ce que** le maximum du tracé de courbe caractéristique d'impression modifié est compris entre 50 % et 70 % pour une couverture surfacique, par rapport au tracé de courbe caractéristique d'impression idéal.

4. Procédé de reproduction par impression selon l'une des revendications précédentes, **caractérisé en ce que** le maximum du tracé de courbe caractéristique d'impression modifié est environ égal à 60 % de la couverture surfacique, par rapport au tracé de courbe caractéristique d'impression idéal.

5. Procédé de reproduction par impression selon l'une des revendications précédentes, **caractérisé en ce que** le passage par zéro du tracé de courbe caractéristique d'impression modifié est compris entre 3 % et 30 % de la couverture surfacique pour une faible couverture surfacique.

6. Procédé de reproduction par impression selon l'une des revendications précédentes, **caractérisé en ce que** le passage par zéro du tracé de courbe caractéristique d'impression modifié est compris entre 5 % et 25 % de la couverture surfacique pour une faible couverture surfacique.

7. Procédé de reproduction par impression selon l'une des revendications précédentes, **caractérisé en ce que** le passage par zéro du tracé de courbe caractéristique d'impression modifié est compris entre 90 % et 98 % de la couverture surfacique pour une couverture surfacique élevée.

8. Procédé de reproduction par impression selon l'une des revendications précédentes, **caractérisé en ce que** le passage par zéro du tracé de courbe caractéristique d'impression modifié est compris entre 95 % et 98 % de la couverture surfacique pour une couverture surfacique élevée.

9. Procédé de reproduction par impression selon l'une des revendications précédentes, **caractérisé en ce que** le passage par zéro du tracé de courbe caractéristique d'impression modifié présente une pente plus faible pour une faible couverture surfacique que le passage par zéro pour une couverture surfacique élevée.

10. Procédé de reproduction par impression selon la revendication 9, **caractérisé en ce que** la pente du passage par zéro est comprise entre 20° et 30° pour une faible couverture surfacique.

11. Procédé de reproduction par impression selon la revendication 9 ou 10, **caractérisé en ce que** la pente du passage par zéro est comprise entre 25° et 35° pour une couverture surfacique élevée.

12. Procédé de reproduction par impression selon l'une des revendications précédentes, **caractérisé en ce que** le maximum du tracé de courbe caractéristique d'impression modifié est déterminé par corrélation entre la couverture surfacique théorique et l'engraissement du point.

13. Procédé de reproduction par impression selon l'une des revendications précédentes, **caractérisé en ce que** le tracé de courbe caractéristique d'impression modifié est prédéfini par une fonction mathématique.

14. Procédé de reproduction par impression selon la revendication 13, **caractérisé en ce que** la fonction prédéfinie comprend plusieurs arcs de cercle.

15. Procédé de reproduction par impression selon la revendication 14, **caractérisé en ce que** la fonction définie comprend deux arcs de cercle.

16. Procédé de reproduction par impression selon la revendication 14 ou 15, **caractérisé en ce que** la position du centre du cercle qui forme un arc de cercle est réglable.

17. Procédé de reproduction par impression selon l'une des revendications 14 à 16, **caractérisé en ce que** le rayon du cercle qui forme un arc de cercle est réglable.

18. Procédé de reproduction par impression selon l'une des revendications 13 à 17, **caractérisé en ce que** la fonction mathématique prédéfinie consiste en un ou plusieurs arcs d'ellipse ou de parabole ou d'hyperbole.

19. Procédé de reproduction par impression selon l'une des revendications précédentes, **caractérisé en ce que** le tracé de courbe caractéristique d'impression modifié présente un engraissement maximal de point inférieur en pourcentage à 30 %, par rapport au tracé de courbe caractéristique d'impression idéal.

20. Procédé de reproduction par impression selon la revendication 19, **caractérisé en ce que** l'engraissement maximal de point est compris entre 5 % et 30 % en pourcentage.

21. Procédé de reproduction par impression selon la revendication 20, **caractérisé en ce que** l'engraissement maximal de point est environ égal à 10 % en pourcentage.

22. Procédé de reproduction par impression selon l'une des revendications précédentes, **caractérisé en ce qu'**il est recouru à un tracé noir de courbe caractéristique d'impression pour le noir.

23. Procédé de reproduction par impression selon l'une des revendications précédentes, **caractérisé en ce qu'**il est recouru à un tracé de courbe caractéristique d'impression à variété de couleur pour les variétés de couleur.

24. Procédé de reproduction par impression selon l'une des revendications précédentes, **caractérisé en ce que** des encres d'imprimerie de densité élevée sont utilisées pour l'impression.

25. Procédé de reproduction par impression selon la revendication 24, **caractérisé en ce que** la densité standard pour l'encre d'imprimerie de moindre densité est environ égale à 1,6 dans l'impression.

26. Procédé de reproduction par impression selon l'une des revendications précédentes, **caractérisé en ce qu'**une échelle CMYK de couleurs d'imprimerie est utilisée pour l'impression.

27. Procédé de reproduction par impression selon l'une des revendications 24 à 26, **caractérisé en ce que** la densité standard pour l'encre d'imprimerie de couleur jaune (Y) est environ égale à 2,0 dans l'impression.

28. Procédé de reproduction par impression selon l'une des revendications 24 à 27, **caractérisé en ce que** la densité standard pour l'encre d'imprimerie de couleur magenta (M) est environ égale à 2,4 dans l'impression.

29. Procédé de reproduction par impression selon l'une des revendications 24 à 28, **caractérisé en ce que** la densité standard pour l'encre d'imprimerie de couleur cyan (C) est environ égale à 2,5 dans l'impression.

30. Procédé de reproduction par impression selon l'une des revendications 24 à 29, **caractérisé en ce que** la densité standard pour l'encre d'imprimerie de couleur noire (B) est environ égale à 3,0 dans l'impression.

31. Procédé de reproduction par impression selon l'une des revendications 24 à 30, **caractérisé en ce qu'**une encre d'impression est fabriquée par mélange du liant, d'un colorant et d'auxiliaires d'impression, et **en ce que** la part de colorant dans une encre est comprise entre 15 % et 40 % en tant que teneur en pigments.

32. Procédé de reproduction par impression selon l'une des revendications précédentes, **caractérisé en ce que** la transformation de l'original en données d'impression comprend une transformation d'espace chromatique, d'un espace chromatique RGB en un espace chromatique CMYK.

33. Procédé de reproduction par impression selon l'une des revendications précédentes, **caractérisé en ce que** le procédé d'impression est un procédé d'impression offset.

34. Procédé de reproduction par impression selon l'une des revendications précédentes, **caractérisé en ce que** le tracé de courbe caractéristique d'impression modifié est saisi dans un système de gestion des couleurs.
